(19) **Europäisches Patentamt European Patent Office Office européen des brevets**

(11) **EP 1 777 805 A1**

(12) **EUROPÄISCHE PATENTANMELDUNG**

(43) Veröffentlichungstag:
   **25.04.2007 Patentblatt 2007/17**

(51) Int Cl.:
   ***H02P 13/06*** (2006.01)   ***H02P 1/28*** (2006.01)

(21) Anmeldenummer: **05023026.7**

(22) Anmeldetag: **21.10.2005**

(84) Benannte Vertragsstaaten:
   **AT BE BG CH CY CZ DE DK EE ES FI FR GB GR HU IE IS IT LI LT LU LV MC NL PL PT RO SE SI SK TR**
   Benannte Erstreckungsstaaten:
   **AL BA HR MK YU**

(71) Anmelder: **Jakob, Karl, Dipl.-Ing.(FH)**
   **D-85598 Baldham (DE)**

(72) Erfinder: **Jakob, Karl, Dipl.-Ing.(FH)**
   **D-85598 Baldham (DE)**

(74) Vertreter: **Körner, Ekkehard et al**
   **Kroher * Strobel,**
   **Rechts- und Patentanwälte,**
   **Bavariaring 20**
   **80336 München (DE)**

(54) **Stromversorgungsschaltung für einen Drehstrommotor**

(57) Bei einer Stromversorgungsschaltung für einen Drehstromasynchron-Kurzschlussläufermotor (M) mit einem Drehstrom-Trenntransformator (T) und einer von einer Steuereinrichtung (ST) gesteuerten Schalterkombination (S1 bis S4), mit deren Hilfe unterschiedliche, sinusförmige Drehstromspannungen den Wicklungen des Drehstrommotors (M) zur Erzielung unterschiedlicher Motordrehzahlen bei sich mit der Motordrehzahl quadratisch ändernder Last zuführbar sind, sind an ihrem Eingang oder direkt an den Erregerwicklungen des Drehstrommotors (M) jeweils zwischen den spannungsführenden Anschlussleitungen ein erster Phasenschieberkondensator (C1) und über wenigstens einen Schalter (S5) wenigstens ein zweiter Phasenschieberkondensator (C2) angeschlossen, und die Schalter (S5) der Phasenschieberkondensatoren sind zu ihrer Steuerung mit der Steuereinrichtung (ST) verbunden und je nach Schaltzustand der Schalterkombination (S1 bis S4) geschlossen oder geöffnet.

**Beschreibung**

Die Erfindung bezieht sich auf eine Stromversorgungsschaltung für einen Drehstromasynchron-Kurzschlussläufermotor mit einem Drehstrom-Trenntransformator und einer von einer Steuereinrichtung gesteuerten Schalterkombination, mit deren Hilfe unterschiedliche, sinusförmige Drehstromspannungen den Wicklungen des Motors zur Erzielung unterschiedlicher Motordrehzahlen bei sich mit der Motordrehzahl quadratisch ändernder Last zuführbar sind. Eine solche Stromversorgungsschaltung ist aus EP 1 580 878 B1 bekannt.

Der Antrieb eines Ventilators mittels eines Motors ist ein typischer Betriebsfall, bei dem die Last am antreibenden Motor sich mit der Drehzahl des Ventilators quadratisch ändert. Bei Großkühlanlagen oder Großklimaanlagen werden für die Rückkühlung des Kühlmittels Verflüssiger verwendet, die mit Ventilatoren bestückt sind, die von Drehstrommotoren angetrieben sind. Die Drehstrommotoren werden entweder durch Stern-Dreieck-Schaltung mit zwei Drehzahlen betrieben, oder aber mit über Phasenanschnittsteuerungen oder Frequenzumformer stufenlos veränderbaren Drehzahlen.

Die Verflüssiger in Großklimaanlagen haben häufig eine Ventilatorbestückung von 24 Einheiten in einer Gruppe, von denen der einzelne Ventilator im Beispiel eine Leistung von 2,4 kW hat. Bei größeren Anlagen werden dann mitunter 2 bis 30 solcher Gruppen zu einer Batterie verbunden. Die Anschlussleistungen sind dann beträchtlich. Beispielsweise hat die neue BMW-Automobilfabrik in Leipzig eine Rückkühlanlage mit einem Anschlusswert von etwa 870 kW.

Der Betrieb einer induktiven Last ohne Kompensation am Stromnetz hat bekanntlich einen Blindstrom zur Folge. Dieser belastet das Leitungsnetz und die Generatoren im Elektrizitätswerk, weshalb die Elektrizitätsversorgungsunternehmen von Großabnehmern eine Blindstromkompensation verlangen und/oder die Blindleistung in Rechnung stellen.

Der Phasenwinkel zwischen Spannung und Strom ändert sich bei einem Drehstrommotor mit dessen Drehzahl. Bei einer stufenlosen Drehzahlverstellung, wie beispielsweise mittels der erwähnten Phasenanschnittsteuerungen oder Frequenzwandler, ist es nicht möglich, eine Blindstromkompensationsanlage mit automatischer Nachstellung zu installieren, weil diese Anlage durch überhäufige Nachstellung sich sehr schnell selbst zerstören würde. In Anlagen, in denen eine vergleichsweise bescheidene Zahl unterschiedlicher Drehzahlen in Betracht kommt, wie bei der Anwendung, die in der eingangs genannten EP 1 580 878 B1 beschrieben ist, liegen die Verhältnisse günstiger.

Der Erfindung liegt die Aufgabe zugrunde, eine Stromversorgungsschaltung der eingangs genannten Art anzugeben, mit der eine Blindstromkompensation bei mehreren unterschiedlichen Betriebsdrehzahlen auf technisch einfache und wirtschaftliche Weise erzielt wird.

Diese Aufgabe wird durch die im Anspruch 1 angegebenen Merkmale gelöst. Vorteilhafte Ausgestaltungen sind Gegenstand der abhängigen Ansprüche.

Die Erfindung ermöglicht eine Lösung, bei der beispielsweise für sechs unterschiedliche Motordrehzahlen mit Hilfe nur zweier Kondensatoren pro Spannungsphase eine Kompensation erzielbar ist, die den cosφ in den Bereich von 0,92 bis 0,98 schiebt.

Bei Drehstromkurzschlussläufermotoren ist es möglich, durch gestufte Spannungsabsenkung exakt definierte Lastbetriebszutände zu erreichen. Bei diesen Motoren ergeben sich dann, wenn die Drehmomente mit der Motordrehzahl quadratisch abfallen, die idealen Umstände für die Kompensation der Blindleistung. Nachfolgend sei ein Beispiel eines Drehstromkurzschlussläufermotors von 2,4 kW Leistung und einer Nenndrehzahl von 680 U/min genannt, der mit sechs unterschiedlichen Drehzahlen, je nach Größe der den Wicklungssträngen des Motors zugeführten Spannung, betrieben wird. Tabelle 1 zeigt, wie die Blindleistung zur Wirkleistung im Verhältnis steht.

Tabelle 1

| Drehzahl U/min | cosφ | Wirkleistung W | Scheinleistung VA | Blindleistung VA | Blindleistung / Wirkleistung (%) |
|---|---|---|---|---|---|
| 682 | 0,57 | 1968 | 3398 | 2786 | 141 |
| 646 | 0,70 | 1716 | 2436 | 1739 | 101 |
| 568 | 0,77 | 1376 | 1736 | 1138 | 83 |
| 497 | 0,77 | 1098 | 1417 | 905 | 82 |
| 297 | 0,71 | 452 | 623 | 438 | 96 |
| 110 | 0,68 | 164 | 239 | 175 | 107 |

Die in der Tabelle aufgeführten Wirkleistungen und durch den cosφ ausgedrückten Phasenverschiebungen zwischen Wirkspannung und Wirkstrom wurden gemessen, die anderen Werte errechnet. Wie man sieht, ergeben sich ohne Blindstromkompensation bei allen Drehzahlen äußerst ungünstige Verhältnisse.

Nachdem die Elektrizitätsversorgungsunternehmen bei gewerblichen Anlagen Zähleinrichtungen anbringen, die sowohl den zum vollen Preis berechneten Wirkstrom als auch den zu etwa einem Zehntel des vollen Preises berechneten Blindstrom erfassen, lohnt die Überlegung, den Blindstrom zu kompensieren.

Nimmt man die Stromversorgungsschaltung, die in EP 1 580 878 B1 beschrieben ist, als Beispiel, sind den Wicklungssträngen des Motors folgende Spannungen zugeführt:

Stufe 1 = 3 x 400 V
Stufe 2 = 3 x 315 V
Stufe 3 = 3 x 230 V
Stufe 4 = 3 x 182 V
Stufe 5 = 3 x 105 V
Stufe 6 = 3 x 62 V.

Die notwendige Kondensatorgröße für die Kompensation des Blindstroms errechnet sich nach der Formel

$$C = \frac{P(\tan\varphi 1 - \tan\varphi 2)}{2U^2 \cdot \pi \cdot \nu}$$

worin P die Wirkleistung, $\phi 1$ der Ist-Phasenwinkel, $\phi 2$ der Soll-Phasenwinkel und $\nu$ die Netzfrequenz in Hz sind.

Für einen Motor einer Leistung von 2,4 kW ergeben sich in den oben genannten Stufen folgende Kondensatorgrößen:

Stufe 1 = 44 $\mu$F
Stufe 2 = 39 $\mu$F
Stufe 3 = 43 $\mu$F
Stufe 4 = 53 $\mu$F
Stufe 5 = 92 $\mu$F
Stufe 6 = 118 $\mu$F.

In den Stufen 1 bis 4 ist der Mittelwert etwa 45 $\mu$F, was man auf 50 $\mu$F aufrunden kann. Bei den Stufen 5 und 6 ist der Mittelwert etwa 100 $\mu$F. Das bedeutet, man kann in den Stufen 1 bis 4 mit einem Kondensator pro Wicklungsstrang von 50 $\mu$F kompensieren, und den Stufen 5 und 6 ist diesem Kondensator ein zweiten Kondensator mit weiteren 50 $\mu$F parallel zu schalten. Aufgrund der konstanten Stufenspannungen ergibt sich auf diese Weise eine ideale Möglichkeit, den $\cos\phi$ in den Bereich zwischen 0,92 und 0,98 zu legen. Wegen der Kapazitäten des Leitungsnetzes ist eine Kompensation auf einen $\cos\phi$ = 1 ohnehin weder notwendig noch erwünscht. Es ist aber auch denkbar, einen ersten Kondensatorsatz aus drei Kondensatoren von je 45 $\mu$F und einen zweiten Kondensatorsatz aus drei Kondensatoren zu je 55 $\mu$F zu verwenden. Die Stufen 1, 2 und 3 würden dann mit dem ersten Kondensatorsatz betrieben, die Stufe 4 mit dem zweiten Kondensatorsatz und die Stufen 5 und 6 mit beiden Kondensatorsätzen.

In der nachfolgenden Tabelle 2 wird eine Wirtschaftlichkeitsberechnung für eine Anlage mit zwölf Motoren von je 2,4 kW Leistung gegeben. Die darin zugrundegelegten Jahreslaufzeiten der Kühlanlage gelten für den Standort München und sind der Korrelationstabelle für München aus DIN 4710 entnommen.

Tabelle 2

| Stufe | Drehzahl U/min | Jahreslaufzeit Std. | KWh | Wirkstromkosten € | Blindstromkosten € |
|---|---|---|---|---|---|
| 1 | 682 | 2,6 | 61,40 | 6,14 | 0,80 |
| 2 | 646 | 21,0 | 432,43 | 43,24 | 5,62 |
| 3 | 568 | 154,5 | 2.551,10 | 255,11 | 33,16 |
| 4 | 497 | 1034,0 | 13.623,98 | 1362,40 | 177,11 |
| 5 | 297 | 3676,1 | 19.939,17 | 1993,92 | 259,21 |
| 6 | 110 | 607,0 | 1.195,36 | 119,54 | 15,54 |
| Kosten: | Summierte Kosten für Wirkstrom<br>Summierte Kosten für Blindstrom | | | € 3780,35 | € 491,44 |

Man ersieht aus Tabelle 2, dass innerhalb eines Jahres knapp EUR 500,00 an Blindstromkosten eingespart werden können, wenn eine Blindstromkompensation mit Hilfe der Erfindung ausgeführt wird. In eineinhalb bis zwei Jahren lassen sich somit die Kosten, die die Installation einer Kondensatorbatterie und ihrer Schalter bedingen, amortisieren.

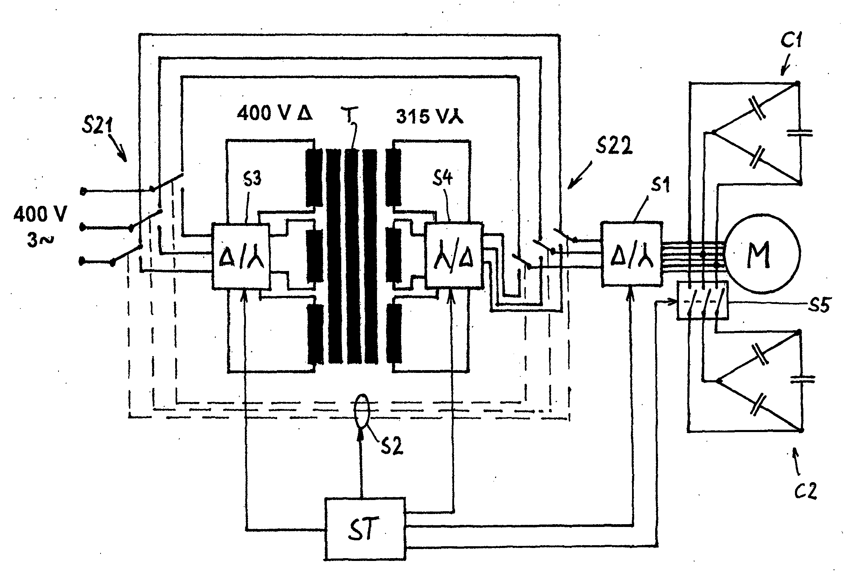

Nachfolgend soll ein praktisches Ausführungsbeispiel der Erfindung anhand der Zeichnung näher erläutert werden.

Die Zeichnung zeigt das Schemaschaltbild der erfindungsgemäßen Stromversorgungsschaltung und eines daran angeschlossenen Drehstromasynchron-Kurzschlussläufermotors M. Die Stromversorgungsschaltung enthält einen Drehstrom-Trenntransformator T, dessen Primärseite im dargestellten Beispiel in Dreieckschaltung für eine Netzspannung von 400 V ausgelegt ist und dessen Sekundärseite in Sternschaltung im dargestellten Beispiel auf 315 V ausgelegt ist, und drei Stern/Dreieck-Schalter S1, S3 und S4 sowie einen dreipoligen Umschalter S2 mit zwei Ebenen. Die Anordnung wird von einer Steuereinrichtung ST zur selektiven Betätigung aller vorgenannten Schalter vervollständigt. Insoweit ist die Schaltung aus EP 1 580 878 B1 bekannt.

Der bekannten Schaltung sind zwei Kondensatorsätze C1 und C2 hinzugefügt, die jeweils drei Kondensatoren enthalten, die in Dreieckschaltung miteinander verbunden sind. Der erste Kondensatorsatz C1 ist mit den Wicklungen des Motors M fest verbunden, während der zweite Kondensatorsatz C2 mit den nämlichen Wicklungen des Motors über einen dreipoligen Ein/Aus-Schalter S5 verbunden ist, der zu seiner Steuerung mit der Steuereinrichtung ST verbunden ist.

Der erste Stern/Dreieck-Schalter S1 ist dem Drehstrommotor M zugeordnet und dient dazu, dessen Wicklungen in bekannter Weise in Stern oder Dreieck miteinander zu verbinden und an die Versorgung anzuschließen. Der dreipolige Umschalter S2 weist zwei miteinander gekoppelte Schalterebenen S21 und S22 auf, von denen die eine (S21) an ihren beweglichen Umschaltkontakten mit dem Stromnetz und die andere (S22) an ihren beweglichen Umschaltkontakten mit dem dem Motor M zugeordneten ersten Stern/Dreieck-Schalter S1 verbunden ist. Die einen feststehenden Kontakte der einen Schalterebene S21 sind mit dem zweiten Stern/Dreieck-Schalter S3 verbunden, und die einen feststehenden Kontakte der anderen Schalterebene S22 sind mit dem dritten Stern/Dreieck-Schalter S4 verbunden. Die anderen feststehenden Kontakte beider Schalterebenen S21 und S22 des Umschalters S2 sind jeweils miteinander verbunden. Wegen Einzelheiten wird auf die Zeichnung verwiesen. Alternativ ist es auch möglich, die zur Schalterebene S22 gehörenden beweglichen Kontakte direkt mit den letztgenannten feststehenden Kontakten der Schalterebene S21 zu verbinden, so daß die Schalterebene S22 als einfacher dreipoliger Ein/Aus-Schalter ausgeführt werden kann.

Der zweite Stern/Dreieck-Umschalter S3 ist mit den Primärwicklungen des Transformators T verbunden und daher in der Lage, diese Wicklungen wahlweise in Dreieckschaltung und in Sternschaltung mit dem Stromnetz zu verbinden. Ferner ist der dritte Stern/Dreieck-Schalter S4 mit den Sekundärwicklungen des Transformators T verbunden und daher in der Lage, dessen Wicklungen wahlweise in Sternschaltung und in Dreieckschaltung mit dem motorseitigen, d. h. dem ersten Stern/Dreieck-Schalter S1 zu verbinden.

Je nach Schalterstellung des dreipoligen Zwei-Ebenen-Umschalters S2 ist der Stern/Dreieck-Umschalter S1 des Motors M entweder direkt mit dem Stromnetz oder mit der Sekundärseite des Transformators T verbunden, dessen Primärseite in letztgenanntem Falle mit dem Stromnetz verbunden ist, ansonsten aber abgeschaltet ist. Der Transformator T ist somit aus der Spannungsversorgung des Motors M vollständig ausgekoppelt, wenn dessen Versorgung direkt aus dem Netz erfolgt.

Mit Hilfe der Steuereinrichtung ST ist also der Zwei-Ebenen-Schalter S2 so einstellbar, daß der Motor M direkt mit dem Stromnetz verbunden und gleichzeitig der Transformator T sowohl vom Netz als auch vom Motor M getrennt ist, oder aber die Primärseite des Transformator T über den zweiten Stern/Dreieck-Schalter S3 mit dem Netz und die Sekundärseite des Transformators T über den dritten Stern/Dreieck-Schalter S4 und den ersten Stern/Dreieck-Schalter S1 mit dem Motor M verbunden sind.

Wenn der letztgenannte Schalterzustand eingerichtet ist, besteht vermittels der Steuereinrichtung ST weiterhin die Option, die Primärseite des Transformators T über den Stern/Dreieck-Schalter S3 wahlweise in Dreieckschaltung oder in Sternschaltung mit dem Netz zu verbinden, und in jeder dieser Schaltstellungen des zweiten Stern/Dreieck-Schalters S3 besteht vermittels der Steuereinrichtung ST die Option, die Sekundärseite des Transformators vermittels des dritten Stern/Dreieck-Schalters S4 in Sternschaltung oder in Dreieckschaltung zu schalten und in dieser Konfiguration über den ersten Stern/Dreieck-Schalter S1 mit dem Motor M zu verbinden. Diese verschiedenen Optionen sind in der Tabelle 3 unten aufgetragen, die für ein Beispiel gilt, in dem die Sekundärseite des Transformators so dimensioniert ist, dass die von ihr abgegebene Spannung in Sternschaltung zwischen den Spannungen Phase gegen Phase und Phase gegen Null der vollen Netzspannung liegt. Diese genannte, von der Sekundärseite des Transformators abgegebene Spannung hat im Beispiel der Tabelle 3 in einem Drehstromnetz mit einer Spannung Phase gegen Null von 230 V eine Größe von etwa 315 V.

Weiterhin ist, wie schon angegeben, der den zweiten Kondensatorsatz C2 wahlweise mit den Motorwicklungen verbindende oder davon trennende, dreipolige Ein/Aus-Schalter S5 zu seiner Steuerung mit der Steuereinrichtung ST verbunden.

Tabelle 3

| Option Nr. | Trafo T Primär Y | Trafo T Primär Δ | Trafo T Sekundär Y | Trafo T Sekundär Δ | Motor M Y | Motor M Δ | Schalter S5 ein/aus | Strangspannung V |
|---|---|---|---|---|---|---|---|---|
| 1 | Motor am Netz | | | | - | x | aus | 400 |
| 2 | - | x | x | - | - | x | aus | 315 |
| 3 | Motor am Netz | | | | x | - | aus | 230 |
| 4 | - | x | x | - | x | - | aus | 182 |
| 5 | x | - | x | - | - | x | ein | 105 |
| 6 | x | - | x | - | x | - | ein | 62 |

Anmerkung: In den Optionen 2 und 4 bis 6 befindet sich der Zwei-Ebenen-Schalter S2 in der den Transformator in die Stromversorgung des Motors M einbeziehenden Stellung, in den Optionen 1 und 3 ist der Transformator T vollkommen spannungslos.

Wie sich errechnen lässt und in der praktischen Ausführung erweist, liegen einige der sich durch die Optionen ergebenden Drehzahlen sehr eng beieinander, weshalb es im vorliegenden Falle ausreichend ist, wenn von den 10 möglichen Optionen nur 6 Optionen verwendet werden, die in der obigen Tabelle 3 berücksichtigt sind, wodurch die Steuereinrichtung ST entsprechend einfacher ausgelegt werden kann. In anderen Fällen, insbesondere wenn man noch niedrigere Drehzahlen erreichen will, kann es erforderlich sein, weitere der 10 möglichen Optionen hinzuzunehmen oder anstelle anderer der in der Tabelle 3 aufgeführten Optionen zu verwenden. Die Zeichnung beinhaltet deshalb eine Schalterkombination, die alle Optionen zulässt.

Mit einem geringen Aufwand ist somit eine Vielzahl von Motordrehzahlen erzielbar und zugleich eine Korrektur des cosφ in den Bereich über 0,90 hinein möglich.

Es ist abschließend anzumerken, dass ggf. mehr als ein zweiter Kondensatorsatz vorgesehen sein kann, wenn sich bei den verschiedenen, sich aus den Schalterstellungen ergebenden Drehzahlen Phasenwinkel einstellen, die mit Hilfe eines einzelnen Kondensators oder einer Kombination aus zwei Kondensatoren nicht ausreichend kompensiert werden können. Ferner ist auch anzumerken, dass zwei Kondensatorsätze ggf. unterschiedlich groß dimensioniert werden können, so dass mit dem wahlweisen Verbinden eines ausgewählten oder beider Kondensatorsätze insgesamt drei unterschiedliche Kapazitätswerte an die Motorwicklungen angeschaltet werden können.

**Patentansprüche**

**1.** Stromversorgungsschaltung für einen Drehstromasynchron-Kurzschlussläufermotor (M) mit einem Drehstrom-Trenntransformator (T) und einer von einer Steuereinrichtung (ST) gesteuerten Schalterkombination (S1, S2, S3, S4), mit deren Hilfe unterschiedliche, sinusförmige Drehstromspannungen den Wicklungen des Drehstrommotors (M) zur Erzielung unterschiedlicher Motordrehzahlen bei sich mit der Motordrehzahl quadratisch ändernder Last zuführbar sind, **dadurch gekennzeichnet, dass** am Eingang der Stromversorgungsschaltung oder direkt an den Erregerwicklungen des Drehstrommotors (M) jeweils zwischen den spannungsführenden Anschlussleitungen ein erster Phasenschieberkondensator (C1) und über wenigstens einen Schalter (S5) wenigstens ein zweiter Phasenschieberkondensator (C2) angeschlossen sind und dass die Schalter (S5) der Phasenschieberkondensatoren zu ihrer Steuerung mit der Steuereinrichtung (ST) verbunden sind.

**2.** Stromversorgungsschaltung nach Anspruch 1, **dadurch gekennzeichnet, dass** die ersten Phasenschieberkondensatoren (C1) über Schalter zwischen die Motorwicklungen schaltbar sind.

**3.** Stromversorgungsschaltung nach Anspruch 1 oder 2, **dadurch gekennzeichnet, dass** alle Phasenschieberkondensatoren (C1, C2) die gleiche Kapazität haben.

**4.** Stromversorgungsschaltung nach Anspruch 1 oder 2, **dadurch gekennzeichnet, dass** die zweiten Phasenschieberkondensatoren (C2) andere Kapazitäten haben, als die ersten Phasenschieberkondensatoren (C1).

**5.** Stromversorgungsschaltung nach einem der vorhergehenden Ansprüche, **dadurch gekennzeichnet, dass** zur Vermeidung von Oberschwingungen jedem Phasenschieberkondensator (C1, C2) eine Drossel in Serie geschaltet ist.

**6.** Stromversorgungsschaltung nach einem der vorhergehenden Ansprüche, **dadurch gekennzeichnet, dass** die Schalterkombination (S1 bis S4) dazu eingerichtet ist, die Primärwicklungen des Trenntransformators (T), dessen Sekundärwicklungen und die Erregerwicklungen des Drehstrommotors (M) wahlweise und unabhängig voneinander in Dreieckschaltung und in Sternschaltung miteinander zu verbinden und die Erregerwicklungen des Drehstrommotors (M) wahlweise direkt oder über den Trenntransformator (T) mit dem Stromnetz zu verbinden.

Europäisches
Patentamt

**EUROPÄISCHER RECHERCHENBERICHT**

Nummer der Anmeldung

EP 05 02 3026

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,Y | EP 1 580 878 A (JAKOB, KARL, DIPL.-ING. DR. H.C) 28. September 2005 (2005-09-28) * das ganze Dokument * ----- | 1-6 | H02P13/06 H02P1/28 |
| Y | US 2 436 302 A (HYDE MERRITT A ET AL) 17. Februar 1948 (1948-02-17) * Spalte 3, Zeile 32 - Spalte 7, Zeile 6; Abbildungen 1-3 * ----- | 1-6 | |
| A | US 2 871 439 A (SHAW HENRY V) 27. Januar 1959 (1959-01-27) ----- | | |
| A | GB 360 687 A (ELECTRICAL IMPROVEMENTS LIMITED; ARNOLD HENRY HUMAN) 12. November 1931 (1931-11-12) ----- | | |
| A | US 2 508 771 A (PELL ERIC) 23. Mai 1950 (1950-05-23) ----- | | |
| A | EP 1 341 295 A (JAKOB, KARL, DIPL.-ING) 3. September 2003 (2003-09-03) ----- | | |

RECHERCHIERTE
SACHGEBIETE (IPC)

H02P

Der vorliegende Recherchenbericht wurde für alle Patentansprüche erstellt

| Recherchenort | Abschlußdatum der Recherche | Prüfer |
|---|---|---|
| Den Haag | 27. März 2006 | Davis, A |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 05 02 3026

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-03-2006

| Im Recherchenbericht angeführtes Patentdokument | | Datum der Veröffentlichung | Mitglied(er) der Patentfamilie | | Datum der Veröffentlichung |
|---|---|---|---|---|---|
| EP 1580878 | A | 28-09-2005 | AT<br>CN<br>DE | 306144 T<br>1601888 A<br>20314865 U1 | 15-10-2005<br>30-03-2005<br>28-10-2004 |
| US 2436302 | A | 17-02-1948 | KEINE | | |
| US 2871439 | A | 27-01-1959 | KEINE | | |
| GB 360687 | A | 12-11-1931 | KEINE | | |
| US 2508771 | A | 23-05-1950 | KEINE | | |
| EP 1341295 | A | 03-09-2003 | KEINE | | |

EPO FORM P0461

Für nähere Einzelheiten zu diesem Anhang : siehe Amtsblatt des Europäischen Patentamts, Nr.12/82

**EP 1 777 805 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1580878 B1